# EUROPEAN PATENT APPLICATION

(11) **EP 3 888 845 A1**
(43) Date of publication of application: **06.10.2021**
(21) Application number: 21165928.9
(22) Date of filing: 30.03.2021
(51) Int. Cl.: B23Q 11/10

(54) **SEPARATOR DEVICE FOR SEPARATING PROCESSING SCRAPS OF MACHINE TOOLS IN EJECTION SYSTEMS AND SYSTEM FOR EJECTING EQUIPPED WITH SAID SEPARATOR DEVICE**

(30) Priority: 30.03.2020 IT 202000006646
(71) Applicant: Tecnimetal International S.r.L., 26037 San Giovanni In Croce (Cremona) (IT)
(72) Inventor: BORRINI, Matteo, 26037 SAN GIOVANNI IN CROCE (CR) (IT)
(74) Representative: Fanzini, Valeriano

(57) **Abstract**

A separator device (10) for separating processing scraps (S) of machine tools from the processing liquid, which can be installed in an ejection system (100) of processing scraps (S) of machine tools comprising a supporting structure (12), a separation element (14) adapted to be arranged so as to be immersed in the processing liquid and to collect solid parts (Ss), in particular suspended parts of said processing scraps (S), and a movement means (16) for moving said separation element (14) adapted to move said separation element (14) from an area placed below the processing liquid level to an area placed above the processing liquid level and towards a discharge area (18) and vice versa.

## Description

This invention falls within the field of ejection systems for processing scraps produced by machine tools during the operation thereof. In particular, the present invention relates to the conveyor systems of said scraps and more particularly to the filtration systems associated with such conveyor systems.

It is well known in the operation of machine tools, such as grinding machines, lathes, etc., that solid scrap materials are produced, such as chips and/or particles and/or dust removed from corresponding tools (millers, abrasive discs, etc.). The scrap material is typically mixed with liquids coming directly from the processing, such as cooling and/or lubrication liquids/oils.

At said machine tools, conveyor systems are used to receive said scrap material and convey it to subsequent recovery or disposal stations. To allow the recovery and disposal, the known systems envisage a separation step of the solid scrap material from the liquid through appropriate filtration, possibly through several successive stages of filters for a gradual filtration from coarser to finer.

The known conveyor systems comprise a receiving bath for the scrap material (solid plus liquid) to be ejected to which are associated one or more filter units and at least one conveyor belt (straight or with ramp) with articulated or scraping mesh to transport the filtered chips towards a collection point, or container. Said conveyor belt, preferably closed in a loop and appropriately motorised, therefore extends inside the bath.

Inside the bath, the material to be ejected is moved through appropriate pumping systems, typically by means of suction pumps. The conveyor belt and filters are arranged upstream of the pumps to convey the chips towards the collection point before the chips themselves reach the suction pumps. Lastly, the suction pumps expel the processing liquid cleaned of the chips previously retained by the filter units.

According to the known techniques, the filters consist of filtration grilles, or other filtration, which are positioned to intercept the flow of the scrap material, solid plus liquid, at a channel inside the bath.

However, processing scraps exist which are difficult to filter with the filters and to suction with the pumps.

This includes, for example, processing scraps of light alloys such as aluminium, carbon, etc.

Furthermore, the type of processing, such as the milling of special devices such as compressors or turbines, requires precision processing which generates very fine chips which are similar to dust.

Such machine tool processing scraps have the feature of being so light as to float on the processing liquid. In particular, a foam often forms on the processing liquid, e.g., cooling and/or lubrication liquids/oils, which contributes to keeping the processing scraps suspended.

It is thereby impossible to retain said scraps through the filters, both because of the small size thereof and because of the lightness thereof, which tends to keep them suspended on the liquid.

The accumulation of said scrap material, in particular dust, requires periodic maintenance to remove it in order to avoid damaging the pumps or ejecting a liquid with scrap material which has not been completely separated.

With the conventional filtration and pumping systems, it is therefore not possible to separate said scraps from the liquid.

### EXPOSURE AND ADVANTAGES OF THE INVENTION

The technical problem underlying the present invention is that of making available to the art a separator device for separating processing scraps of machine tools structurally and functionally conceived to overcome one or more of the limits set out above with reference to the cited known art.

In the context of the aforementioned problem, a main object of the invention is to make available a device which allows the separation of lighter processing scraps which remain suspended in the processing liquid and which cannot be separated with the known filtering systems.

A further object of the invention is to make available to the art a separator device as part of a rational and flexible solution which can also be installed, also subsequently, in existing ejection systems.

Such and other objects are achieved by virtue of the features of the invention reported in independent claim 1. The dependent claims outline preferred and/or particularly advantageous aspects of the invention.

In particular, an embodiment of the present invention provides a separator device for separating processing scraps of machine tools, in particular which can be installed in an ejection system, in which the separator device comprises:
- a supporting structure;
- a separation element adapted to be arranged so as to be immersed in the processing liquid and to collect solid parts, in particular suspended parts of said processing scraps;
- a movement means for moving said separation element adapted to move said separation element from an area placed below the processing liquid level to an area placed above the processing liquid level and towards a discharge area and vice versa.

By virtue of this solution, the separation element immerses in and then exits the liquid and is able to remove even very light and small particles of processing scraps which are suspended on said processing liquid.

In a preferred embodiment, the separator device comprises ejection means arranged at said discharge area.

Preferably, the ejection means comprises a discharge channel, preferably a slide.

Thereby the processing scraps can be collected in a single area to facilitate the subsequent disposal thereof.

According to a preferred embodiment, the separation element comprises a laminar element preferably conformed like a grille comprising openings for releasing the liquid and retaining the solid parts.

By virtue of the grille design, the separation element acts as a filter, separating the solid particles from the liquid flowing out of said openings.

In a preferred embodiment, said grille conformation envisages openings with dimensions comprised between 8 mm and 0.1 mm.

By virtue of said range in dimensions of the grille openings, it is possible to define openings of appropriate dimensions according to the desired filtration level for the separation of different types of processing scraps.

Preferably, the laminar element comprises an edge adapted to define a closed perimeter configured to retain solid parts of the processing scraps resting on said laminar element.

By virtue of said edge, the particles removed from the laminar element are more effectively retained during the entire section which the separation element travels from when it exits from the processing liquid until it reaches the discharge area.

According to a preferred embodiment, the movement means is configured so as to envisage a first step of immersing the separation element in the processing liquid for collecting the processing scraps, a second step of emerging from the processing liquid towards the discharge area and a third step of discharging said processing scraps, onto said discharge area.

This thereby ensures a complete working cycle from the collection of the processing scraps from the processing liquid until the ejection thereof.

In a preferred embodiment, the movement means comprises an articulated mechanism with a closed loop structure for moving the separation element in an advancement direction along a closed circuit.

Preferably, the separation element comprises a support portion configured to be mechanically connected to the articulated mechanism so that the laminar element of said separation element remains arranged in the horizontal position, preferably with the edge turned upwards, during at least part of the second step of emerging from the processing liquid towards the discharge area for preferably arriving overturned above the discharge area.

The fact that the laminar element preferably remains in the horizontal position when it exits the liquid ensures that all the processing scraps are retained until arriving above the discharge area, preventing the uncontrolled falling thereof. The fall of the processing scraps into the discharge area is further ensured by the overturning of the separation element above the discharge area.

Said feature, together with the edge of the laminar element, collaborates to make the retention of the processing scraps collected from the separation element more effective.

According to a preferred embodiment, the movement means comprises an electric motor.

Thereby, the movement of the separator device is managed automatically and can be controlled and varied according to operational requirements.

A further advantageous aspect of the invention envisages that the separator device comprises an activation means configured to make said separation element vibrate/shake, preferably during the second step of emerging from the processing liquid towards the discharge area and/or during the third discharge step.

This allows to improve the separation of the liquid from the solid parts and allows the subsequent separation of said solid parts from the separation element upon discharge.

Preferably said separation element comprises an activation counter-element adapted to engage with a corresponding activation element of the activation means.

In particular, said activation counter-element is an element protruding from the edge, preferably a pin, adapted to interfere with a toothed element preferably integral with the supporting structure.

This is a simple, economic and still effective solution for the complete ejection of the scraps.

In a second aspect, the present invention makes an ejection system available for ejecting processing scraps of machine tools comprising an inlet area for said processing scraps, a first outlet area for solid parts of said processing scraps, a second outlet area for the liquid part of said processing scraps, in which the ejection system comprises a separator device, made according to the above description.

In a preferred embodiment, the system comprises a bath provided with said inlet area for the processing scraps and a filtering area between said inlet area and said second outlet area, said filtering area comprising a filter for retaining solid parts of said processing scraps.

Preferably, the ejection system comprises a suction system arranged downstream of the filter and at the second outlet area.

According to a preferred embodiment, the suction system comprises suction pumps.

An advantageous configuration envisages that the separator device is positioned in the bath, upstream and/or downstream of the filter for retaining solid parts.

It is therefore possible to decide on the most suitable position for the separator device as a function of the features of the scrap material or the filtering system or the discharge area, or as a function of other technical constructional features of the ejection system.

In a preferred embodiment, the ejection system comprises a conveyor belt for transporting the solid parts of the processing scraps to the first outlet area.

Preferably, the bath comprises a first compartment for said separator device and a second compartment adapted to receive the conveyor belt, said two compartments hydraulically communicating with each other.

In a preferred embodiment, the discharge area of the separator device is located above the conveyor belt.

This configuration allows the conveyor belt itself to be used to eject the processing scraps collected from the separator device, without the addition of dedicated devices.

Other configurations, which for example envisage the discharge into appropriate containers or dedicated disposal areas, can be equally advantageous.

### BRIEF DESCRIPTION OF THE DRAWINGS

This and other features will be more apparent from the following description of some of the embodiments, illustrated purely by way of non-limiting example in the accompanying drawings.
- Figure 1: illustrates in axonometric view an ejection system of scraps equipped with a separator device according to a preferred embodiment of the invention;
- Figure 2: illustrates the system and the device of figure 1 from another point of view;
- Figure 3: illustrates the system and the device of figure 1 with some elements removed;

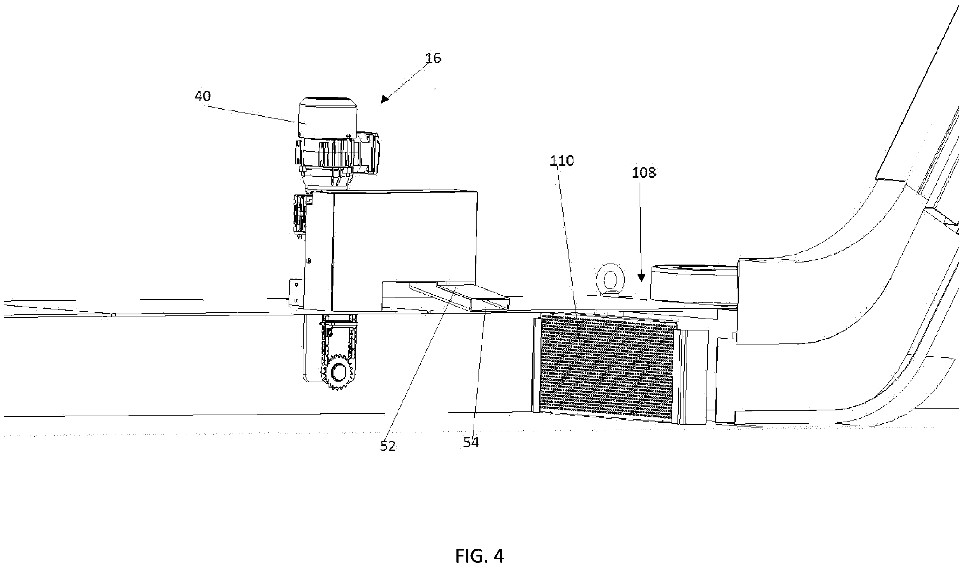

- Figure 4: illustrates a partially sectioned axonometric view of the system and the device according to the preferred embodiment;

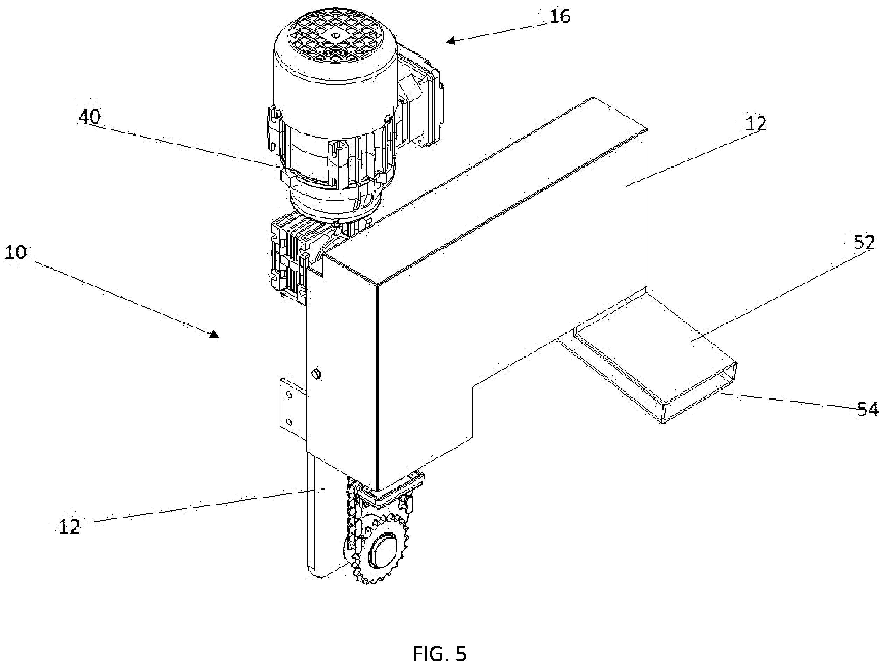

- Figure 5: illustrates the separator device of figure 1 isolated from the rest;
- Figure 6: illustrates the separator device of figure 5 with the covering elements removed;

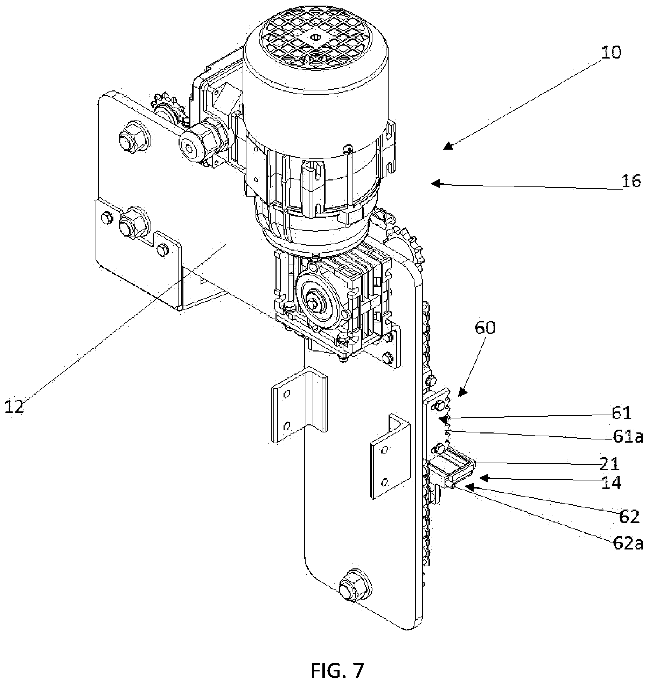

- Figure 7: illustrates a view in an opposite plane to that of figure 6;
- Figure 8: shows an enlarged detail of figure 6.

With particular reference to the figures, 100 comprehensively denotes an ejection system of processing scraps S of machine tools and 10 denotes a separator device according to the present invention.

Processing scraps S is to be understood in the context of the present invention, preferably, as the scraps resulting from the operation of machine tools, such as grinding machines, lathes, etc., consisting of a solid part Ss, for example chips and/or particles and/or dust removed from corresponding tools (millers, abrasive discs, etc.), and a liquid part SI coming directly from the processing, such as cooling and/or lubrication liquids/oils.

The ejection system 100 according to the invention is advantageously arranged near one or more machine tools (not shown in the figures) for receiving said processing scraps S. The ejection system 100 has the function of separating the liquid part SI from the solid part Ss of the processing scraps S.

Therefore, the ejection system 100 comprises an inlet area 102 adapted to receive the processing scraps S, a first outlet area 104 for the solid parts Ss of said processing scraps S and a second outlet area 106 for the liquid part SI of said scraps S.

Between the inlet area 102 and the second outlet area 106, at least one filtering area 108 can be defined in which an appropriate filter 110 is responsible for retaining the solid parts Ss of the processing scraps S.

In order to convey the mixture consisting of the processing scraps S between the inlet area 102 and the second outlet area 106, one or more suction pumps 112 are preferably used, arranged downstream of said possible filter 110. The suction pumps 112 are preferably positioned at the second outlet area 106.

The second outlet area 106 is therefore defined downstream of the filtering area 108. In a preferred embodiment, the second outlet area 106 corresponds substantially with the outlet of said one or more suction pumps 112. A further outlet 109, for example in the form of a sleeve, is preferably defined in the second outlet area 106. Such an outlet 109 can be used, for example, as an emergency outlet or for maintenance work.

The solid parts Ss and liquid parts SI of the processing scraps S exiting the ejection system 100 will be appropriately conveyed to respective containers and/or hydraulic circuits for disposal or further treatment.

The ejection system 100 preferably comprises a bath 120 provided with said inlet area 102 for the inlet of said processing scraps S and said second outlet area 106 for the ejection of said liquid part SI.

The bath 120 preferably comprises a first compartment 122 adapted to receive said filter 110 and a second compartment 124 hydraulically communicating with the first compartment 122, preferably by means of appropriate through openings 126.

In the embodiment illustrated in the figures, the first compartment 122 and the second compartment 124 are preferably side by side and more preferably extend according to respective longitudinal axes parallel to each other.

In preferred embodiments, however, the two compartments 122, 124 can have any shape which adapts to the constructional and/or layout requirements of the installation site.

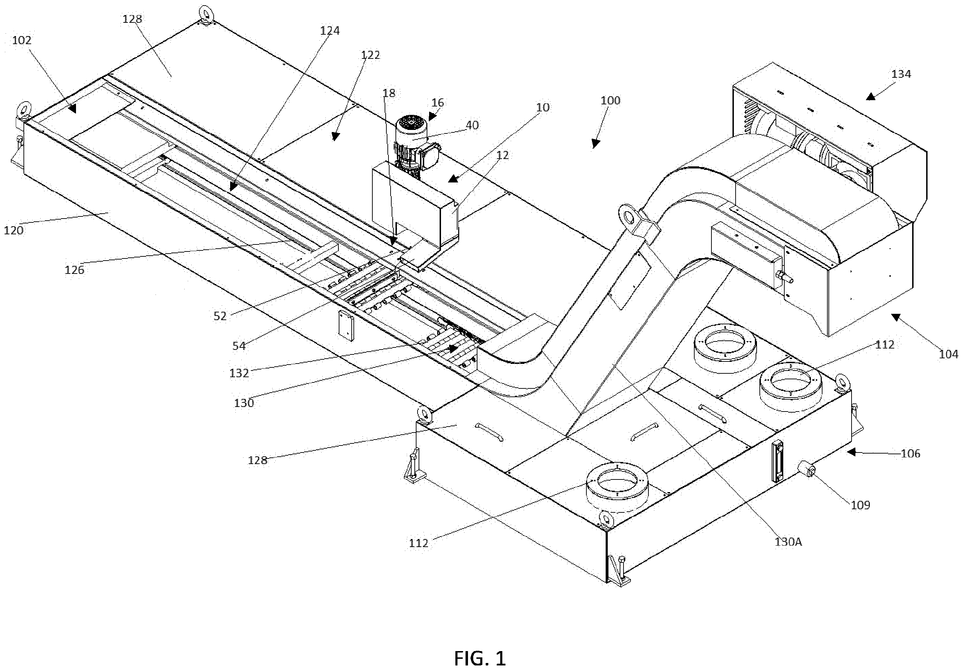

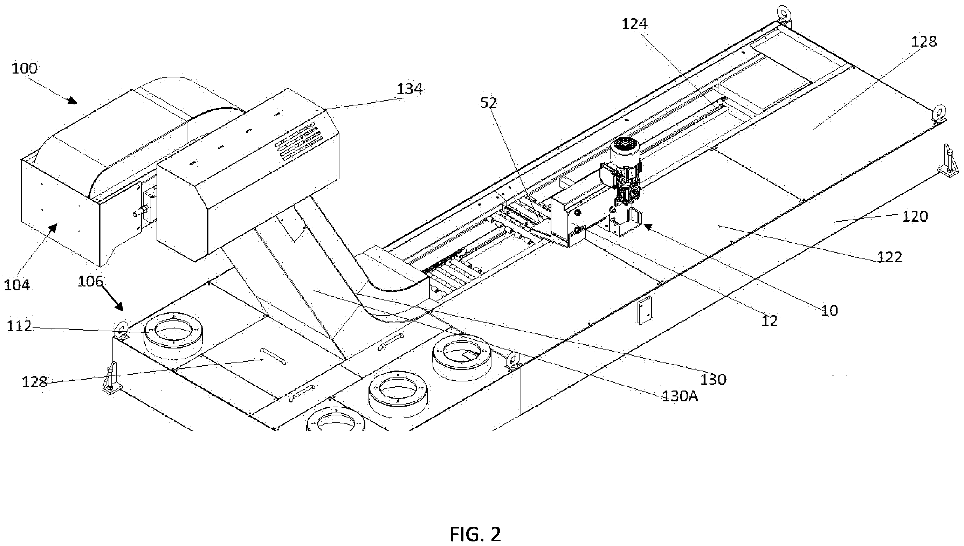

As shown in figures 1 and 2, the first compartment 122 and the suction area comprising the pumps 112 are provided with special protective covers 128.

A conveyor belt 130 is mounted at the second compartment 124 and is responsible for transporting the solid parts Ss of the processing scraps S towards the first outlet area 104. The conveyor belt 130 preferably comprises a belt 132 closed in a loop and driven by an appropriate motorisation means 134. In the figures, the conveyor belt 132 is not shown in full for the sake of simplicity. In preferred embodiments, and as is well known in the field, the conveyor belt can comprise an articulated mesh belt and/or a scraper belt.

Preferably, the end part 130A of the conveyor belt 130 is inclined upwards to define a ramp which favours the dripping of the liquid SI from the solid parts SS of the processing scraps S. The belt 132 extends and moves inside the second compartment 124 and along the ramp 130.

A first substantial part of the solid parts SS of the scraps S is collected directly above the belt 132, as the processing scraps S are loaded directly onto the belt 132 at said inlet area 102. Such inlet area 102 is preferably any area above the belt 132 running inside the second compartment 124. Preferably, the second compartment 124 is opened upwards for this purpose.

The remaining part of the processing scraps S falls to the bottom of the second compartment 124 and passes to the first compartment 122 by means of the through holes 126. Running along the first compartment 122, the scraps S meet the filter 110.

Said filter is not capable of separating all the solid parts Ss of the processing scraps S from the processing liquid.

In particular, processing scraps S exist which are difficult to filter with the filters 110 and suction with the pumps 112.

These include, for example, processing scraps from the processing of light alloys such as aluminium, carbon, etc., or processing scraps from processing operations such as milling special devices such as compressors or turbines; said precision operations generate very fine chips which are similar to dust.

Said solid parts SS have the feature of being so light that they float on the processing liquid.

Therefore, both the small size of said solid parts SS and the lightness thereof mean that they remain suspended on the liquid.

Furthermore, the processing liquid being for example cooling and/or lubrication liquids/oils, foam is often formed which contributes to keeping said solid parts SS suspended, not allowing them to be filtered with conventional filtering systems.

With the conventional filtration and pumping systems, it is therefore not possible to separate said solid parts SS from the liquid part SI.

According to an advantageous aspect of the present invention, in order to overcome this drawback the ejection system 100 for ejecting the processing scraps S of machine tools comprises the separator device 10, said separator device 10 being positioned in the bath 120, upstream and/or downstream of the filter 110 for retaining the solid parts Ss.

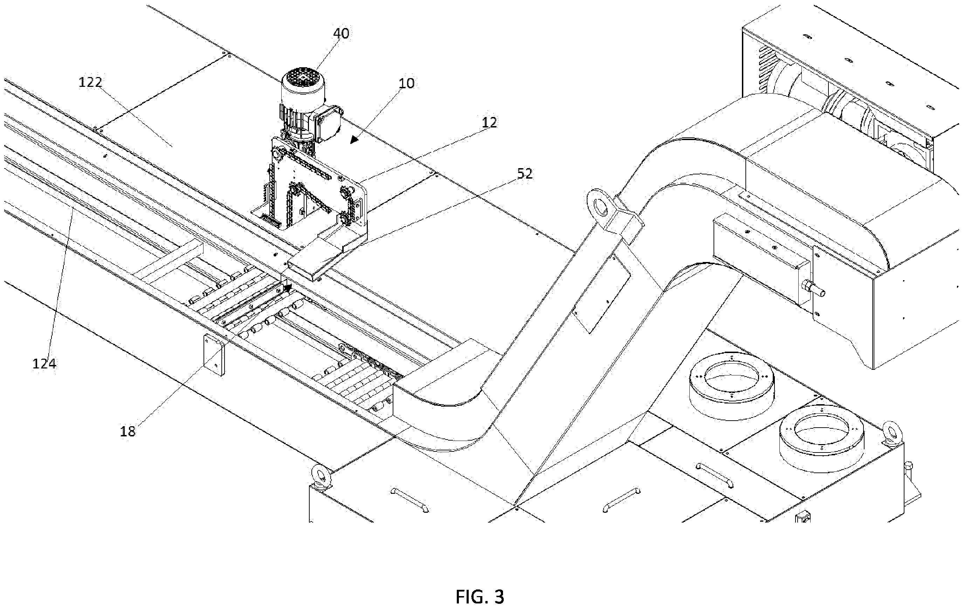

A preferred embodiment shown in figures 1, 2 and 3 envisages that the separator device 10 is placed in the compartment 122.

This position is only an example, but said device can be positioned differently depending on various factors such as: the features of the scrap material, the type of filtering system or the position of the discharge area, or dimensional aspects of the ejection system, etc.

According to an aspect of the invention, the separator device 10 comprises a supporting structure 12 and a separation element 14 adapted to be arranged so as to be immersed in the processing liquid and to collect solid parts Ss, in particular suspended parts, of said processing scraps S.

The separator device 10 then comprises a movement means 16 for moving the separation element 14 adapted to move the separation element 14 from an area placed below the processing liquid level to an area placed above the processing liquid level and towards a discharge area 18 and vice versa.

The discharge area 18 is associated with an ejection means comprising, preferably, a discharge channel 52, or a slide.

The outlet 54 of the discharge channel 52 is preferably positioned above the conveyor belt 130, more preferably above the belt 132.

This configuration allows to use, for the ejection of the solid parts Ss collected from the separator device 10, the conveyor belt 130 itself, without the addition of dedicated devices.

Alternatively other configurations which for example envisage discharging into appropriate containers or dedicated disposal areas, can be equally advantageous.

According to an aspect of the invention, the separation element 14 comprises a laminar element 20; said laminar element 20 is preferably conformed like a grille and comprises openings for releasing the liquid and retaining the solid parts Ss.

Therefore, said laminar element 20 acts as a filter which retains the solid parts Ss collected from the processing liquid during the immersion thereof, as will be further explained below.

In a preferred embodiment, the grille of the separation element 14 envisages openings of appropriate dimensions depending on the desired level of filtration, for example, preferably, grilles with openings capable of passing particles smaller than 8 mm up to grilles with openings capable of passing particles smaller than 0.1 mm.

Furthermore, preferably said openings have the dimensions 0.2mm.

In embodiment variations, the laminar element 20 can be made in a different manner adapted to the purpose, for example a perforated sheet or a woven steel grille.

The laminar element 20 preferably comprises an edge 21 adapted to define a preferably closed perimeter configured to retain the solid parts Ss of the processing scraps S resting on said laminar element 20. The height of the edge 21 defines the volume of solid parts which can be collected from the liquid.

By virtue of said edge 21, the solid parts Ss are prevented from falling from said separation element 14, reducing the effectiveness thereof.

One possible embodiment envisages that the edge 21 is mechanically connected to the laminar element 20.

Alternatively, the solution can also envisage an edge 21 made in a single piece with the laminar element 20, for example by bending.

A further alternative can envisage mixed solutions, i.e., comprising parts of the edge 21 made in a single piece with the laminar element 20 and parts mechanically connected thereto.

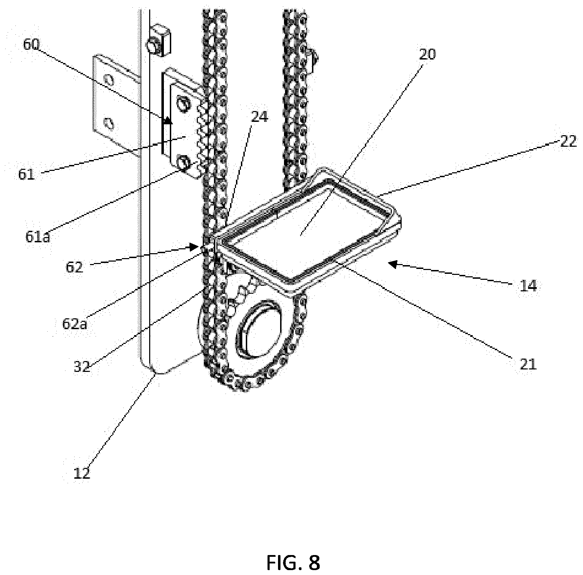

According to an aspect of the invention, the separation element 14 comprises a containment element 22, depicted in figure 8, defining a protrusion of the edge 21, adapted to retain the solid parts Ss, preventing them from falling from said separation element 14 during the movement thereof towards the discharge area 18, as will be better described below.

Said containment element 22 is preferably a protrusion of at least one side of the edge 21 and can be mechanically connected to the edge 21, or made in a single piece therewith.

A preferred embodiment envisages that the movement means 16 is configured to envisage at least a first immersion step of the separation element 14 in the processing liquid from which it collects the solid parts Ss, a second step of emerging from the processing liquid towards the discharge area 18 and a third discharge step onto said discharge area 18.

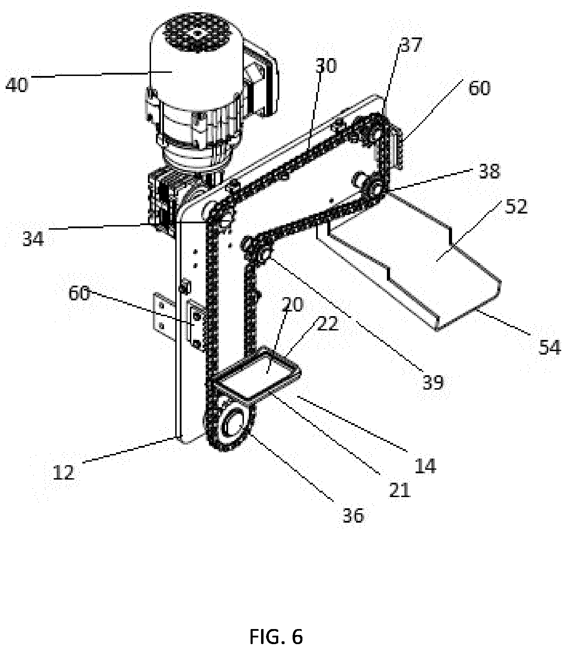

The movement means 16 of the separation element 14 preferably comprises an articulated mechanism 30 closed in a loop for moving the separation element 14 in an advancement direction along a closed circuit, as shown in the illustrative embodiment of figure 6.

The separation element 14 preferably comprises a support portion 24 configured to be mechanically connected to the articulated mechanism 30.

Further, the articulated mechanism 30 preferably comprises a chain 32 to which said support portion 24 of the separation element 14 is fixed.

According to an advantageous aspect, the support portion 24 is mechanically connected to the articulated mechanism 30 so that the laminar element 20 of said separation element 14 remains arranged in the horizontal position, preferably with the edge 21 turned upwards, during at least part of the second step of emerging from the processing liquid towards the discharge area 18 for preferably arriving overturned above the discharge area 18.

The chain 32 is wound on a respective drive gear wheel 34 associated with the output shaft of an electric motor 40.

The closed loop path is then ensured by idle gear wheels 36, 37, 38, 39. The position of said idle gear wheels 36, 37, 38, 39 defines the path illustrated in the figures and which will be described in more detail below.

Said position, and therefore said path, is a non-limiting example, so that any variations in detail which may be necessary for technical and/or functional reasons, and which in any case maintain the laminar element 20 in the horizontal position before the discharge area 18 and preferably overturn it above said area 18, are considered as of now to fall within the same protective scope.

As depicted in the figures, an advantageous aspect of the invention envisages that the first immersion step takes place so that the separation element 14, is immersed with the edge 21 facing downwards and descends below the processing liquid level following a path comprising a substantially straight vertical section from top to bottom and preferably a subsequent 180° rotation section around the idle gear wheel 36 in which the separation element 14 is substantially overturned.

Said path is configured so that the separation element can fall below the minimum processing liquid level, a condition which occurs when the pumps 112 are operational.

The subsequent second emerging step also preferably envisages that the separation element 14 once rotated 180° and therefore with the edge 21 turned upwards, rises above the processing liquid level following a path which envisages a substantially straight vertical section from the bottom upwards and preferably a subsequent substantially straight horizontal section to bring itself above the discharge area 18. In the passage from the vertical straight section to the horizontal straight section, preferably the separation element 14 performs a 90° rotation about the drive gear wheel 34.

After said 90° rotation, the side of the edge 21 which is arranged downwards is preferably the side which has the protrusion defining the containment element 22. Thereby, the element 22 is in a position to help retain the solid parts Ss during said section, in which the separation element 14 is rotated by 90°.

Said path is configured so that the separation element can rise above the maximum processing liquid level, a condition which occurs when the pumps 112 are not operational.

The third discharge step in the figures is preferably carried out so that the separation element 14 performs a further rotation of 90° around the idle gear wheel 37 to bring itself back with the edge 21 downwards, overturning above the discharge area 18 and in particular above the ejection means 52.

In summary, a preferred embodiment envisages that the advancement of the separation element 14 along the closed loop path, according to the clockwise direction with reference to figure 6, determines a first immersion step of the separation element 14 in the processing liquid, said separation element 14 preferably being immersed with the edge 21 facing downwards and descending below the processing liquid level; it is subsequently overturned by rotating 180°.

In the subsequent second emerging step, the separation element 14, with the edge 21 turned upwards, rises above the processing liquid level. In the section ascending to reach above the liquid level, the separation element collects the solid parts Ss, especially those suspended on the liquid. Proceeding upwards, said collected solid parts Ss separate from the liquid part SI, as the openings present on the laminar element 20 allow the exit of said liquid part SI. The edge 21 helps to retain the solid parts Ss collected.

According to an aspect of the invention, the separation element 14 remains in the horizontal position along the vertical straight section and then performs a 180° rotation, above the discharge area 18. Preferably, the separation element 14 performs a first rotation of 90° in the passage from the vertical straight section to the horizontal straight section, which leads it towards the discharge area 18; in said horizontal section, the containment element 22 helps to retain the solid parts Ss preventing them from falling before arriving at the discharge area 18.

In the subsequent third discharge step, the separation element 14 is overturned by rotating a further 90° above the discharge area 18 and in particular above the ejection means 52 where it releases the solid parts Ss by falling.

The solid parts Ss collected above the separation element 14 are released above the discharge channel 52 and, from there, preferably above the conveyor belt 132 to be definitively ejected outside the system 1 in the first outlet area 104.

In preferred embodiments, not shown, the discharge area of the separator device may not be above the conveyor belt 132, but any other appropriate area where the processing scraps from the separation element 10 can be collected and/or ejected.

The rotation along the closed loop circuit therefore carries out the operation of separating a portion of the solid parts Ss, in particular those suspended on the processing liquid. In a preferred embodiment, the rotation along the closed circuit of the separation element 14 occurs continuously. In variant embodiments, the operation can be carried out periodically or occasionally, when planned and/or only when necessary.

In a variant embodiment, the rotation of the separation element 14 can not occur according to the closed path but in an alternate manner, i.e., the separation element 14 moves from the bottom upwards to carry out the action of separating the solid parts Ss from the liquid part SI of the processing liquid and bring said solid parts Ss collected above the separation element 14 above at the discharge area 18. After discharging, the separation element 14 is returned to the initial position thereof below the processing fluid level by means of a reverse rotation of the articulated mechanism 30 (counter-clockwise in figure 6).

An aspect of the invention envisages that the separator device 10 comprises an activation means 60 configured to make the separation element 14 vibrate/shake, preferably during the second step of emerging from the processing liquid towards the discharge area 18 and/or during the third discharge step. In particular, said activation means 60 is placed in the vertical straight section of the ascent.

By virtue of the vibration generated on the separation element 14, the release of the liquid part SI during the second emerging step is facilitated, while the detachment of the solid parts Ss from the separation element 14 itself is facilitated, facilitating the fall thereof into the discharge area 18.

Said separation element 14 preferably comprises an activation counter-element 62 adapted to engage with a corresponding activation element 61 of the activation means 60.

As depicted in figure 6, said activation counter-element 62 can be a protruding element 62a, preferably from the edge 21.

For example as depicted, said protruding element 62a is a pin, capable of interfering with a toothed element 61a preferably integral with the supporting structure 12.

During the movement of the separation element 14 said protruding element 62a comes into contact with the alternating protrusions and recesses of the toothing of the toothed element 61a, generating a vibration or shaking of the separation element 14.

This solution achieves the desired effect through a simple and economical system.

In a preferred embodiment of the invention, the separator device 10 is fixedly mounted and is an integral part of the ejection system 100, preferably by providing for the fixing of the supporting structure 12 of the separator device 10 to the bath 120 of the system 1.

In variant embodiments, however, the separator device 10 can consist of a separate unit removably associated with the ejection system 100.

In a further variant embodiment, the separator device 10 can form a stand-alone unit which can be associated with existing systems by making simple modifications at the hand of the expert in the art to allow the mounting thereof.

It is understood however that what is described above has an illustrative and non-limiting purpose, therefore, possible variants of detail that may be necessary for technical and/or functional reasons, are considered from now falling within the same protective scope defined by the claims indicated below.

## Claims

1. Separator device (10) for separating processing scraps (S) of machine tools from the processing liquid, which can be installed in an ejection system (100) of processing scraps (S) of machine tools, **characterised in that** it comprises:
- a supporting structure (12);
- a separation element (14) adapted to be arranged so as to be immersed in the processing liquid and to collect solid parts (Ss), in particular suspended parts of said processing scraps (S);
- a movement means (16) for moving said separation element (14) adapted to move said separation element (14) from an area placed below the processing liquid level to an area placed above the processing liquid level and towards a discharge area (18) and vice versa.

2. Device (10) according to claim 1, **characterised in that** it comprises an ejection means (52) arranged at said discharge area (18).

3. Device (10) according to claim 2, **characterised in that** said ejection means (52) comprises a discharge channel, preferably a slide.

4. Device (10) according to any one of the preceding claims, **characterised in that** said separation element (14) comprises a laminar element (20), said laminar element (20) preferably conformed like a grille comprising openings for releasing a liquid part (SI) and retaining the solid parts (Ss) of said processing scraps (S).

5. Device (10) according to claim 4, **characterised in that** said grille envisages openings with dimensions comprised between 8 mm and 0.1 mm.

6. Device (10) according to any one of claims 4 or 5, **characterised in that** said laminar element (20) comprises an edge (21) adapted to define a preferably closed perimeter configured to retain said solid parts (Ss) of the processing scraps (S) resting on said laminar element (20) and preferably comprises a containment element (22) which defines a protrusion of at least one side of the edge (21).

7. Device (10) according to any one of the preceding claims, **characterised in that** said movement means (16) is configured so as to envisage a first step of immersing the separation element (14) in the processing liquid for collecting said solid parts Ss, a second step of emerging from the processing liquid towards the discharge area (18) and a third step of discharging said solid parts Ss, onto said discharge area (18).

8. Device (10) according to any one of the preceding claims, **characterised in that** said movement means (16) comprises an articulated mechanism (30) with a closed loop structure for moving said separation element (14) in an advancement direction along a closed circuit.

9. Device (10) according to any one of the preceding claims, **characterised in that** the separation element (14) comprises a support portion (24) configured to be mechanically connected to the articulated mechanism (30) so that the laminar element (20), remains arranged in the horizontal position, preferably with the edge 21 turned upwards, during at least part of the second step of emerging from the processing liquid towards the discharge area (18) for preferably arriving overturned above the discharge area (18).

10. Device (10) according to any one of the preceding claims, **characterised in that** it comprises an activation means (60) configured to make said separation element (14) vibrate/shake, preferably during the second step of emerging from the processing liquid towards the discharge area (18) and/or during the third discharge step.

11. System (100) for ejecting processing scraps (S) of machine tools comprising an inlet area (102) for said processing scraps (S), a first outlet area (104) for solid parts (Ss) of said processing scraps (S), a second outlet area (106) for the liquid part (SI) of said processing scraps (S), **characterised in that** it comprises a separator device (10) made according to any one of the preceding claims.

12. System (100) according to claim 11, **characterised in that** it comprises a bath (120) provided with said inlet area (102) for said processing scraps (S) and a filtering area (108) between said inlet area (102) and said second outlet area (106), said filtering area (108) comprising a filter (110) for retaining solid parts (Ss) of said processing scraps (S).

13. System (100) according to any one of claims 11 to 12, **characterised in that** it comprises a suction system (112) arranged downstream of said filter (110) and at said second outlet area (106).

14. System (100) according to any one of claims 11 to 13, **characterised in that** the separator device (10) is positioned in the bath (120), upstream and/or downstream of the filter (110) for retaining solid parts (Ss).

15. System (100) according to any one of claims 11 to 14, **characterised in that** it comprises a conveyor belt (130) for transporting said solid parts (Ss) of said processing scraps (S) towards said first outlet area (104) and preferably the bath (120) comprises a first compartment (122) for said separator device (10) and a second compartment (124) adapted to receive said conveyor belt (130), preferably said two compartments (122, 124) hydraulically communicating with each other.
